**Europäisches Patentamt**

**European Patent Office**

**Office européen des brevets**

(19)

(11) Veröffentlichungsnummer: **0 240 598**
**B1**

# (12) EUROPÄISCHE PATENTSCHRIFT

(45) Veröffentlichungstag der Patentschrift:
**03.01.90**

(21) Anmeldenummer: **86114766.8**

(22) Anmeldetag: **23.10.86**

(51) Int. Cl.⁴: **G01F 23/22**, G01F 23/26

(54) **System zur Füllstandsmessung.**

(30) Priorität: **16.01.86 DE 3601100**

(43) Veröffentlichungstag der Anmeldung:
**14.10.87 Patentblatt 87/42**

(45) Bekanntmachung des Hinweises auf die Patenterteilung:
**03.01.90 Patentblatt 90/1**

(84) Benannte Vertragsstaaten:
**DE FR GB IT NL SE**

(56) Entgegenhaltungen:
**EP-A- 0 152 644**
**DE-A- 3 148 533**
**US-A- 4 423 629**

(73) Patentinhaber: **VDO Adolf Schindling AG,**
**Gräfstrasse 103, D-6000 Frankfurt/Main 90(DE)**

(72) Erfinder: **Sinz, Wolfgang, Hofheimer Strasse 55a,**
**D-6238 Hofheim a T. 7(DE)**

(74) Vertreter: **Klein, Thomas, Dipl.-Ing. (FH), Sodener**
**Strasse 9 Postfach 6140, D-6231 Schwalbach a. Ts.(DE)**

## Beschreibung

Die Erfindung betrifft ein System zur Füllstandsmessung, insbesondere in einem Kraftstoffbehälter, mit einer sich über den Füllstandsbereich erstreckenden Analogsonde, welche Meßwerte liefert, die analog zum Füllstand sind.

Zur Füllstandsmessung, insbesondere in Kraftstoffbehältern, sind verschiedene Anordnungen und Systeme bekannt. So werden beispielsweise auf Folien aufgebrachte Leiterbahnen mit temperaturabhängigem Widerstand kurzzeitig mit einem Strom beaufschlagt. Aus dem durch die Erwärmung bedingten Widerstandsanstieg wird dann darauf geschlossen, wie weit die Leiterbahn mit Kraftstoff bedeckt ist. Die somit abgeleitete, dem Füllstand analoge elektrische Größe kann einem Anzeigeinstrument oder einer digitalen Anzeige zugeführt werden.

Die Folie, welche die Leiterbahnen trägt, ist dabei in einem entsprechend geformten Halter senkrecht im Kraftstoffbehälter angeordnet und erstreckt sich über den gesamten Füllstandsbereich.

Durch verschiedene Einflüsse, wie beispielsweise der Alterung der Folie und der Zusammensetzung der zu messenden Flüssigkeit, verändert sich die Empfindlichkeit eines derartigen Füllstandsmessers mit der Zeit. Außerdem ist nach der Herstellung eine Eichung erforderlich, um Herstellungstoleranzen auszugleichen.

Füllstandsmeßgeräte, die eine bzw. mehrere Digitalsonden aufweisen, sind aus DE-A 3 148 533 bzw. US-A 4 423 629 bekannt. In EP-A 0 152 644 ist ein Gerät mit Meß- und Kompensations-Elektroden offenbart.

Aufgabe der vorliegenden Erfindung ist es, ein System zur Füllstandsmessung anzugeben, bei welchem eine vorgegebene Meßgenauigkeit über lange Zeit erhalten bleibt.

Diese Aufgabe wird erfindungsgemäß dadurch gelöst, daß ferner eine Digitalsonde, welche Meßwerte liefert, die sich sprungartig mit dem Füllstand ändern, angeordnet ist, daß aus einem Vergleich der Meßwerte der Digitalsonde und der Analogsonde Korrekturwerte abgeleitet werden und daß die Meßwerte der Analogsonde mit Hilfe der Korrekturwerte korrigiert und angezeigt werden.

Das erfindungsgemäße System zur Füllstandsmessung hat den Vorteil, daß durch eine Selbsteichung des Systems Veränderungen der Empfindlichkeit kompensiert werden. Außerdem erfolgt automatisch bei der ersten Füllung des Tanks eine erstmalige Eichung, so daß ein aufwendiger Abgleich des Systems beim Hersteller unterbleiben kann.

In vorteilhafter Weise können die Sonden von temperaturabhängigen Widerständen gebildet sein. Die Erfindung kann jedoch auch mit Hilfe anderer Sonden, wie beispielsweise kapazitiven Sonden verwirklicht werden.

Eine Weiterbildung der Erfindung besteht darin, daß die temperaturabhängigen Widerstände von leitfähigen Schichten gebildet sind, die auf eine Trägerfolie aufgebracht sind. Dabei besteht eine besondere Ausgestaltung darin, daß die Analogsonde einen sich über den Füllstandsbereich erstreckenden gleichförmigen temperaturabhängigen Widerstand umfaßt und daß die Digitalsonde einen sich über den Füllstandsbreich erstreckenden Widerstand umfaßt, dessen längenbezogener Widerstand bei einem oder mehreren Füllstandswerten wesentlich größer als im übrigen Füllstandsbereich ist. Dabei können zwei ausgewählte Füllstandswerte vorgesehen sein, welche jeweils im oberen und unteren Teil des Füllstandsbereich liegen. Dadurch können zwei Eichwerte ermittelt werden, obwohl zusätzlich zu den bisherigen beiden Leitern zwischen der Sonde und der elektronischen Schaltung lediglich ein zusätzlicher Leiter benötigt wird.

Die Erfindung ist allerdings auch nicht darauf beschränkt, daß die Digitalsonde von einem Widerstand, also von einer Leiterbahn, gebildet wird. So kann beispielsweise fur jeden ausgewählten Füllstandswert eine Leiterbahn vorgesehen sein.

Eine andere Weiterbildung der Erfindung besteht darin, daß die die Digitalsonde bildende leitfähige Schicht bei den ausgewählten Füllstandswerten mäanderförmig ausgebildet ist und einen geringeren Querschnitt als zwischen den ausgewählten Werten aufweist. Ferner kann die Digitalsonde parallel zur Analogsonde auf der Trägerfolie aufgebracht sein.

Eine andere Weiterbildung ist dadurch gekennzeichnet, daß die Sonden wiederholt kurzzeitig mit Strom beaufschlagt werden, daß die daraus resultierende Widerstandsänderung gemessen wird, daß jeweils ein neuer Korrekturwert gebildet und gespeichert wird, wenn sich der Meßwert der Digitalsonde in einem einen ausgewählten Füllstandswert kennzeichnenden Bereich befindet.

In besonders vorteilhafter Weise läßt sich das erfindungsgemäße System mit Hilfe eines Mikrocomputers, welcher für die Auswertung und Korrektur der Meßwerte vorgesehen ist, verwirklichen.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1 eine schematische Darstellung der Sonden und des Auswertungsgerätes,

Fig. 2 Zeitdiagramme der an den Sonden auftretenden Spannungen und Ströme,

Fig. 3 die Abhängigkeit der Meßwerte der Sonden vom Füllstand,

Fig. 4 eine elektrische Auswertungsschaltung für das erfindungsgemäße System und

Fig. 5 in vereinfachter Darstellung den Ausschnitt eines Flußdiagramms des im Mikrocomputer gespeicherten Programms.

Gleiche Teile sind in den Figuren mit gleichen Bezugszeichen versehen.

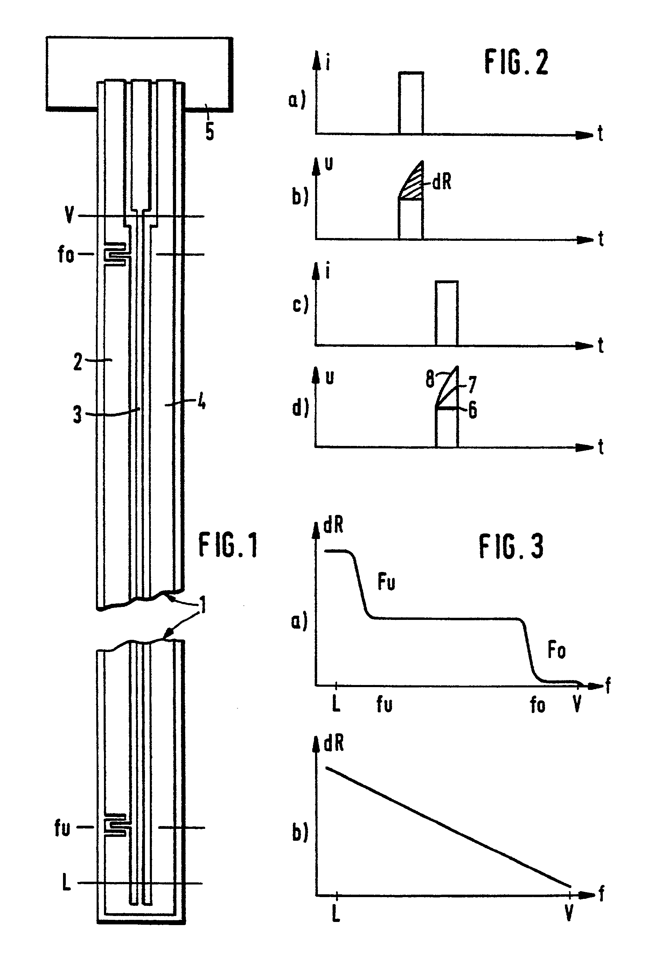

Bei der Anordnung nach Fig. 1 sind auf eine Folie 1 drei Leiterbahnen 2, 3, 4 aufgebracht. Die Folie erstreckt sich über die vertikale Ausdehnung eines nicht dargestellten Kraftstoffbehälters und wird in ebenfalls nicht dargestellten Führungsteilen gehalten. Im oberen Ende ist die Folie mit den Leitern aus dem Kraftstoffbehälter herausgeführt, etwa rechtwinklig abgebogen und in das Gehäuse einer Auswertungsschaltung 5 eingeführt.

Ein geeigneter Werkstoff für die Folie ist Kapton, während sich für die Leiterbahnen eine Kupfer-Nickel-Legierung bewährt hat. Ein brauchbarer Wert für die Dicke der Leiterbahnen ist 3 µm, während als Breite in den zu erwärmenden Abschnitten der Digitalsonde einige zehntel Millimeter in Frage kommen.

Die mittlere Leiterbahn 3 ist als Analogsonde ausgeführt, wozu sie im gesamten zu messenden Füllstandsbereich (von L = leer bis V = voll) einen gleichmäßigen Querschnitt aufweist. Oberhalb des Füllstandsbereichs ist die Leiterbahn 3 breiter, wodurch sich wegen der geringeren Stromdichte eine geringere Erwärmung ergibt, so daß durch Widerstandsänderungen dieses Teils das Meßergebnis möglichst nicht verfälscht wird.

Die Leiterbahn 2 ist während des weitaus größten Teils ihrer Länge mit einem großen Querschnitt versehen, so daß hier ebenfalls keine störende Erwärmung auftritt. Lediglich bei den ausgewählten Füllstandswerten fu und fo ist der Querschnitt wesentlich geringer. Damit sich weiterhin der Widerstand bzw. die Widerstandsänderung auf diese ausgewählten Füllstandswerte konzentriert, ist im Bereich dieser Füllstandswerte die Leiterbahn 2 mäanderförmig ausgebildet.

Die Wahl der Füllstandswerte fo und fu, welche zur Eichung des erfindungsgemäßen Systems dienen, erfolgt unter anderem nach folgenden Gesichtspunkten: im Sinne einer möglichst genauen Eichung ist ein möglichst großer Abstand dieser Werte voneinander erwünscht. Sind sie jedoch zu weit voneinander entfernt, so kann es vorkommen, daß beim praktischen Betrieb des Kraftfahrzeugs die ausgewählten Füllstände gar nicht oder nur sehr selten erreicht werden. So kann beispielsweise ein Besitzer des Kraftfahrzeugs regelmäßig aus Vorsicht bereits bei Erreichen eines Füllstandes von 20 % tanken. Eine Nacheichung des erfindungsgemäßen Systems würde bei einem unteren Füllstandswert von fu = 10 % dann nie vorgenommen werden.

Die Leiterbahn 4 dient als gemeinsame Rückleitung für die als Sonden ausgebildeten Leiterbahnen 2 und 3.

Zur Messung des Füllstandes werden die Analogsonde 3 und die Digitalsonde 2 jeweils kurzzeitig mit einem konstanten Strom beaufschlagt. Der sich während der Dauer des Stromflusses ergebende Spannungsanstieg ist ein Maß für die Widerstandserhöhung und somit für den Anteil der Sonde, welcher nicht mit Flüssigkeit bedeckt ist.

Die zeitlichen Vorgänge sind in Fig. 2 dargestellt. In Zeile a) ist der Verlauf des Stroms i durch die Analogsonde 3 dargestellt. Als zweckmäßig hat sich eine Zeit für den Stromfluß von einer Sekunde bewährt. Die Messung kann beispielsweise alle 30 Sekunden wiederholt werden. In Zeile b) der Fig. 2 ist der Verlauf der Spannung u an der Analogsonde aufgetragen. Die Spannung nimmt mit Einschalten des Stroms zunächst sprunghaft zu und steigt dann, während der Strom konstant bleibt, durch die Erwärmung der Leiterbahn 3 an.

Ist die Leiterbahn mit Flüssigkeit bedeckt, so ergibt sich etwa die untere Grenze des schraffiert dargestellten Dreiecks, während bei leerem Kraftstoffbehälter, wenn also die gesamte Leiterbahn 3 von Luft umgeben ist, der Anstieg der Spannung an der oberen Grenze des schraffiert dargestellten Dreiecks liegt. Zur Auswertung der Widerstandsänderung kann entweder der Widerstand kurz vor dem Abschalten des Stroms i gemessen werden. Es können jedoch auch innerhalb der Bestromungszeit viele Messungen vorgenommen werden, deren Ergebnisse aufsummiert werden, so daß die Fläche eines Dreiecks als Maß für den Füllstand zur Verfügung steht.

Unmittelbar im Anschluß an die Messung mit Hilfe der Analogsonde 3 wird die Digitalsonde 2 mit Strom beaufschlagt. Dadurch ist gewährleistet, daß zwischen den beiden Messungen keine wesentlichen Änderungen des Füllstands und anderer das Meßergebnis beeinflussenden Größen, wie beispielsweise der Temperatur des Kraftstoffs, erfolgt. Während des in Zeile c) der Fig. 2 gezeigten Stromimpulses ist der Strom i wie bei der Analogsonde 3 konstant. Die Spannung u steigt nur gerinfügig an, wenn der Flüssigkeitsstand über fo ist, was in Fig. 2d) mit der Linie 6 angedeutet ist. Befindet sich der Flüssigkeitsstand zwischen den Werten fo und fu, so ergibt sich ein Anstieg gemäß der Linie 7, während bei einem Flüssigkeitsstand unterhalb von fu ein schneller Anstieg gemäß Linie 8 erfolgt.

Ergibt sich bei der Digitalsonde 2 ein Anstieg, welcher deutlich zwischen den Linien 6 und 7 oder 7 und 8 liegt, so befindet sich der Flüssigkeitsstand bei fu oder fo.

Zur weiteren Verdeutlichung sind in Fig. 3 die Widerstandsänderungen dR als Funktion des Füllstandes f aufgetragen - und zwar in Diagramm a) für die Digitalsonde 2 und in Diagramm b) für die Analogsonde 3. Während bei leerem Kraftstoffbehälter die Widerstandsänderung dR am größten ist, nimmt sie in unmittelbarer Nähe des Wertes fu plötzlich ab, um dann im Bereich zwischen den Werten fu und fo in halber Höhe etwa konstant zu bleiben. Ein weiterer Sprung erfolgt bei fo, wonach der Wert dR bis zum maximalen Füllstand V sehr niedrig bleibt. Wird nun das Signal der Digitalsonde zwei Fensterdiskriminatoren zugeführt, mit den Fenstern Fu und Fo, so kann aus den Ausgangssignalen der Fensterdiskriminatoren geschlossen werden, daß sich der Füllstand bei den ausgewählten Werten fu bzw. fo befindet. Aus der Messung mit der Analogsonde 3 ergibt sich die in Diagramm b) gezeigte Kurve. Da die Werte fu und fo durch die Abmessungen der Sonde genau feststehen, kann durch einen Vergleich der Meßergebnisse der Analogsonde mit den Füllstandswerten fo und fu Korrekturwerte ermittelt werden, welche dann unter Anwendung an sich bekannter Rechenregeln auf sämtliche Werte der Analogsonde übertragen werden können.

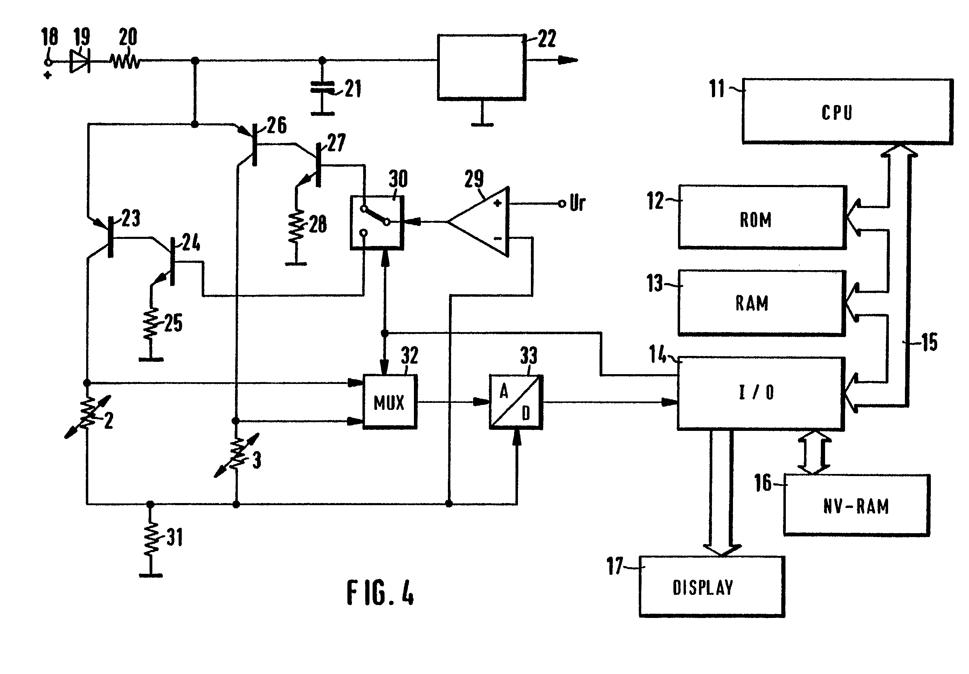

Fig. 4 zeigt eine Schaltungsanordnung, mit welcher die bereits im Zusammenhang mit den Figuren 2 und 3 beschriebene Auswertung durchgeführt werden kann. Sie umfaßt einen Mikrocomputer, dessen wichtigsten Baugruppen schematisch dargestellt sind. Es sind dies die Zentraleinheit 11, ein Programmspeicher 12, ein Variablenspeicher 13, eine Ein/Ausgabeeinheit 14 und ein Bussystem 15. An die Ein/Ausgabeeinheit 14 ist ein nichtflüchtiger Spei-

cher 16 und eine Anzeigevorrichtung 17, beispielsweise ein Flüssigkristalldisplay, angeschlossen. Die Anzeige kann jedoch auch durch ein analog arbeitendes Instrument erfolgen, dem die Meßwerte über einen Digital/Analog-Wandler zugeführt werden. Außerdem ist die Zuführung der digitalen Signale zu einem Bordcomputer, der beispielsweise den Kraftstoffverbrauch und/oder die noch verbleibende Reichweite des Fahrzeugs berechnet, möglich. Es kann jedoch auch ein Mikrocomputer sowohl die Funktionen für das erfindungsgemäße System als auch weitere Funktionen eines sogenannten Bordcomputers durchführen.

Zur Stromversorgung wird der Anschluß 18 der Schaltungsanordnung an den positiven Pol der Fahrzeugbatterie angeschlossen. Eine Diode 19 dient als Verpolungsschutz, während ein Widerstand 20 und ein Kondensator 21 ein Siebglied bildet. Um Fehlmessungen durch Schwankungen der Batteriespannung auszuschließen, wird mit Hilfe einer Stabilisierschaltung 22 eine stabilisierte Betriebsspannung für die einzelnen Baugruppen der Schaltungsanordnung erzeugt. Lediglich die Sonden 2 und 3 sind nicht an die stabilisierte Betriebsspannung angeschlossen, da der Strom durch die Sonden ohnehin geregelt wird.

Die Transistoren 23 und 24 sowie der Widerstand 25 dienen als Konstantstromquelle für die Digitalsonde 2. Desgleichen sind Transistoren 26 und 27 sowie ein Widerstand 28 als Konstantstromquelle für die Analogsonde 3 vorgesehen. Da beide Sonden nacheinander mit Strom beaufschlagt werden, ist sowohl für die Regelung dieses Stroms als auch für die Messung der an den Sonden abfallenden Spannungen jeweils nur ein Regelkreis bzw. ein Analog/Digital-Wandler vorgesehen.

Der Regelkreis wird aus einem Differenzverstärker 29, einem Umschalter 30, den bereits erwähnten Konstantstromquellen, den Sonden 2, 3 und einem Widerstand 31 gebildet. Am Widerstand 31 fällt eine dem jeweiligen Strom proportionale Spannung ab, welche als Ist-Wert dem invertierenden Eingang des Differenzverstärkers 29 zugeführt wird. Der nichtinvertierende Eingang des Differenzverstärkers 29 ist mit einer konstanten Bezugsspannung Ur beaufschlagt. Die Ausgangsspannung des Differenzverstärkers 29 wird mit Hilfe des Umschalters 30 abwechselnd den Konstantstromquellen für die Digitalsonde 2 und die Analogsonde 3 zugeführt. Dazu wird der Umschalter 30 in geeigneter Weise vom Mikrocomputer gesteuert.

Ein Multiplexer 32 verbindet gleichsinnig wie der Schalter 30 jeweils eine der Sonden 2, 3 mit dem Eingang eines Analog/Digital-Wandlers 33. Dem Analog/Digital-Wandler 33 wird als Bezugsspannung die Spannung, welche am Widerstand 31 abfällt, zugeführt. Damit ist gewährleistet, daß jeweils nur die Spannungsabfälle an den Sonden 2 und 3 dem Analog/Digital-Wandler 33 zugeführt werden und als Digitalwerte in den Mikrocomputer eingegeben werden.

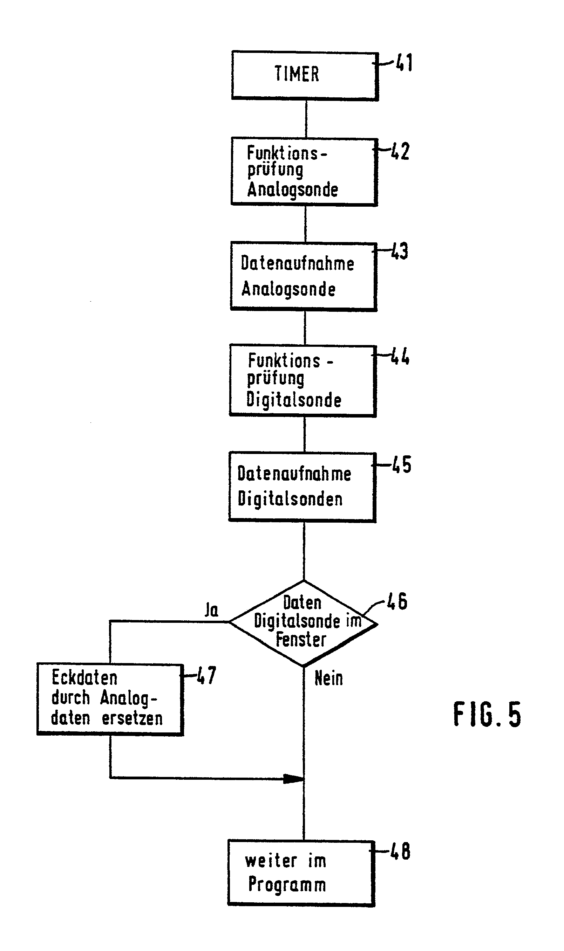

Fig 5 zeigt einen Teil des im Programmspeicher 12 abgelegten Programms. Beim Programmteil 41 wird die zeitliche Steuerung, unter anderem des Umschalters 30 und des Multiplexers 32 festgelegt. Es folgt bei 42 eine Funktionsprüfung der Analogsonde, die beispielsweise darin besteht, daß der Widerstandswert der Analogsonde bei äußerst geringem Strom gemessen wird. Danach erfolgt die Aufnahme der Meßdaten bei 43, wie sie im Zusammenhang mit den Figuren 2 und 3 beschrieben wurde. Im Programmteil 44 wird eine Funktionsprüfung der Digitalsonde durchgeführt, worauf sich im Programmteil 45 die Datenaufnahme von der Digitalsonde anschließt. Bei der Verzweigung 46 wird geprüft, ob sich die ermittelten Meßdaten in einem der Fenster Fo und Fu (Fig. 3) befinden. Ist dieses der Fall, so werden die Eckdaten durch Analogdaten bei 47 ersetzt. Sind die Meßwerte der Digitalsonde nicht in einem der Fenster, so bleiben die Eckdaten unverändert und das Programm wird bei 48 fortgesetzt.

## Patentansprüche

1. System zur Füllstandsmessung, insbesondere in einem Kraftstoffbehälter, mit einer sich über den Füllstandsbereich erstreckenden Analogsonde, welche Meßwerte liefert, die analog zum Füllstand sind,
dadurch gekennzeichnet,
daß ferner eine Digitalsonde (2), welche Meßwerte liefert, die sich sprungartig mit dem Füllstand ändern, angeordnet ist,
daß aus einem Vergleich der Meßwerte der Digitalsonde (2) und der Analogsonde (3) Korrekturwerte abgeleitet werden und
daß die Meßwerte der Analogsonde (3) mit Hilfe der Korrekturwerte korrigiert und angezeigt werden.

2. System nach Anspruch 1, dadurch gekennzeichnet, daß die Sonden (2, 3) von temperaturabhängigen Widerständen gebildet sind.

3. System nach Anspruch 2, dadurch gekennzeichnet, daß die temperaturabhängigen Widerstände von auf eine Trägerfolie (1) aufgebrachten leitfähigen Schichten gebildet sind.

4. System nach Anspruch 3, dadurch gekennzeichnet, daß die Analogsonde 3 einen sich über den Füllstandsbereich erstreckenden gleichförmigen temperaturabhängigen Widerstand umfaßt und daß die Digitalsonde (2) einen sich über den Füllstandsbereich erstreckenden Widerstand umfaßt, dessen längenbezogener Widerstand bei einem oder mehreren ausgewählten Füllstandswerten (fu, fo) wesentlich größer als im übrigen Füllstandsbereich ist.

5. System nach Anspruch 4, dadurch gekennzeichnet, daß zwei ausgewählte Füllstandswerte (fo, fu) vorgesehen sind, welche jeweils im oberen und unteren Teil des Füllstandsbereichs liegen.

6. System nach Anspruch 5, dadurch gekennzeichnet, daß die die Digitalsonde (2) bildende leitfähige Schicht bei den ausgewählten Füllstandswerten (fo, fu) mäanderförmig ausgebildet ist und einen geringeren Querschnitt als zwischen den ausgewählten Füllstandswerten aufweist.

7. System nach Anspruch 6, dadurch gekennzeichnet, daß die Digitalsonde (2) parallel zur Analogsonde (3) auf der Trägerfolie (1) aufgebracht ist.

8. System nach Anspruch 1, dadurch gekennzeichnet, daß die Sonden (2, 3) wiederholt kurzzeitig mit Strom beaufschlagt werden, daß die daraus resultierende Widerstandsänderung gemessen wird, daß jeweils ein neuer Korrekturwert gebildet und gespeichert wird, wenn sich der Meßwert der Digitalsonde (2) in einem einen ausgewählten Füllstandswert kennzeichnenden Bereich (Fo, Fu) befindet.

9. System nach einem der vorhergehenden Ansprüche, dadurch gekennzeichnet, daß ein Mikrocomputer für die Auswertung und Korrektur der Meßwerte vorgesehen ist.

## Claims

1. Level measuring system, especially in a fuel tank, with an analog probe which extends over the region of the tank contents and which delivers measurement values which are in an analog relationship to the contents level characterised in that a digital probe (2) delivering measurement values which change suddenly with the contents level is further arranged, that correction values are derived from a comparison of the measurement values of the digital probe (2) and the analog probe (3), and that the measurement values of the analog probe (3) are corrected with the help of the correction values and displayed.

2. System according to claim 1, characterised in that the probes (2, 3) are formed of temperature-dependent resistors.

3. System according to claim 2, characterised in that the temperature-dependent resistors are formed of conductive layers applied to a supporting sheet element (1).

4. System according to claim 3, characterised in that the analog probe 3 comprises a uniform temperature- dependent resistor extending over the region of the tank contents and that the digital probe (2) comprises a resistor which extends over the region of the tank contents and whose length-related resistance is substantially greater at one or more selected contents level values (fu, fo) than in the remaining contents region.

5. System according to claim 4, characterised in that two selected contents level values (fo, fu) are provided which are situated respectively in the upper and lower parts of the contents level range.

6. System according to claim 5, characterised in that the conductive layer forming the digital probe (2) is given a meander shape at the selected contents level values (fo, fu) and has a smaller cross-section than between the selected contents level values.

7. System according to claim 6, characterised in that the digital probe (2) is arranged on the supporting sheet element (1) parallel to the analog probe (3).

8. System according to claim 1, characterised in that the probes (2, 3) are repeatedly supplied briefly with current, that the resistance change resulting there-from is measured, that a new correction value is formed and stored each time when the measurement value of the digital probe (2) is in a region (Fo, Fu) which characterises a selected contents level value.

9. System according to one of the preceding claims, characterised in that a microcomputer is provided for evaluating and correcting the measurement values.

## Revendications

1. Système de mesure de niveau, en particulier dans un réservoir de carburant, ce système comportant une sonde analogique qui s'étend sur la zone des niveaux, et qui fournit des valeurs de mesure analogiques par rapport au niveau, système caractérisé en ce qu'il y a en outre une sonde numérique (2), qui fournit des valeurs de mesure qui varient en même temps que le niveau, avec des sautes; en ce que des valeurs de correction sont déduites d'une comparaison entre les valeurs de mesure de la sonde numérique (2) et celles de la sonde analogique (3); et en ce que les valeurs de mesure de la sonde analogique (3) sont corrigées à l'aide des valeurs de correction, et affichées.

2. Système selon la revendication 1, caractérisé en ce que les sondes (2, 3) sont formées par des résistances dont la valeur dépend de la température.

3. Système selon la revendication 2, caractérisé en ce que les résistances dont la valeur dépend de la température sont formées par des couches conductrices déposées sur une feuille mince (1) de support.

4. Système selon la revendication 3, caractérisé en ce que la sonde analogique 3 comprend une résistance dont la valeur dépend de la température, dont la forme est partout la même et qui s'étend sur la zone des niveaux, et en ce que la sonde numérique (2) comprend une résistance qui s'étend sur la zone des niveaux et dont la résistance, rapportée à la longueur, est, à l'emplacement d'une ou plusieurs valeurs de niveau (fu, fo) sélectionnées, sensiblement plus grande que dans le reste de la zone ou plage de niveaux.

5. Système selon la revendication 4, caractérisé en ce qu'il est prévu deux valeurs (fo, fu) sélectionnées de niveau, qui se situent respectivement dans la partie supérieure et dans la partie inférieure de la zone ou plage de niveaux.

6. Système selon la revendication 5, caractérisé en ce que la couche conductrice qui forme la sonde numérique (2) est conformée en méandre(s) à l'emplacement des valeurs de niveau choisies (fo, fu) et présente une section transversale plus faible qu'entre les valeurs de niveau choisies.

7. Système selon la revendication 6, caractérisé en ce que la sonde numérique (2) est disposée parallèlement à la sonde analogique (3) sur la feuille mince (1) de support.

8. Système selon la revendication 1, caractérisé en ce que les sondes (2, 3) sont alimentées, brièvement et de façon répétée, par un courant; en ce que la variation de résistance qui en résulte est mesurée en ce que, dans chaque cas, une nouvelle valeur de correction est établie et est mise en mémoire lorsque la valeur de mesure obtenue à l'aide de la sonde numérique (2) se trouve dans une zone caractéristique (Fo, Fu) d'une valeur de niveau sélectionnée.

9. Système selon une des revendications précédentes, caractérisé en ce qu'on prévoit un microprocesseur pour l'exploitation et pour la correction des valeurs de mesure.

FIG.1

FIG.2

FIG.3

FIG. 4

EP 0 240 598 B1

```
          ┌─────────────┐  ⌐41
          │    TIMER    │
          └─────────────┘
                 │
          ┌─────────────┐  ⌐42
          │ Funktions-  │
          │ prüfung     │
          │ Analogsonde │
          └─────────────┘
                 │
          ┌─────────────┐  ⌐43
          │ Datenaufnahme│
          │ Analogsonde │
          └─────────────┘
                 │
          ┌─────────────┐  ⌐44
          │ Funktions - │
          │ prüfung     │
          │ Digitalsonde│
          └─────────────┘
                 │
          ┌─────────────┐  ⌐45
          │ Datenaufnahme│
          │ Digitalsonden│
          └─────────────┘
                 │
           Ja        Daten      ⌐46
          ◄────  Digitalsonde im
                    Fenster
  ┌─────────────┐  ⌐47    Nein
  │ Eckdaten    │
  │ durch Analog-│
  │ daten ersetzen│
  └─────────────┘
        │
        └──────────►
                 │
          ┌─────────────┐  ⌐48
          │ weiter im   │
          │ Programm    │
          └─────────────┘
```

FIG. 5